**Europäisches Patentamt**

**European Patent Office**

**Office européen des brevets**

(11) Veröffentlichungsnummer : **0 056 080**
**B1**

(12) **EUROPÄISCHE PATENTSCHRIFT**

(45) Veröffentlichungstag der Patentschrift :
28.08.85

(21) Anmeldenummer : 81108037.3

(22) Anmeldetag : 07.10.81

(51) Int. Cl.⁴ : **H 02 G 15/00**, H 02 G 15/18,
F 16 L 47/00

(54) **Längsgeteiltes Muffenrohr aus thermoplastischem Kunststoff mit Formgedächtnis.**

(30) Priorität : 19.12.80 DE 3048051

(43) Veröffentlichungstag der Anmeldung :
21.07.82 Patentblatt 82/29

(45) Bekanntmachung des Hinweises auf die Patenterteilung : 28.08.85 Patentblatt 85/35

(84) Benannte Vertragsstaaten :
AT BE CH FR GB IT LI NL SE

(56) Entgegenhaltungen :
EP-A- 0 023 418
DE-A- 2 411 610
FR-A- 1 585 488
FR-A- 2 332 599
FR-A- 2 342 833
GB-A- 2 043 729
GB-A- 2 057 788
US-A- 3 379 218
US-A- 3 542 077

(73) Patentinhaber : **Siemens Aktiengesellschaft**
**Berlin und München Wittelsbacherplatz 2**
**D-8000 München 2 (DE)**

(72) Erfinder : **Meltsch, Hans-Jürgen, Ing.-grad.**
**Odinstrasse 26**
**D-8034 Germering (DE)**

## Beschreibung

Die Erfindung betrifft ein längsgeteiltes Muffenrohr aus thermoplastischem Kunststoff, dem ein Formedächtnis verleihbar und das durch Wärmezufuhr auf den zu umhüllenden Gegenstand aufschrumpfbar ist, das an den mit völlig im Material des Muffenrohres eingelagerten bandförmigen Verstärkungen versehenen Längsrändern entlang der Teilungslinie Verschlußelemente in Form von Haken- und Rastelementen aufweist, wobei das Material der Verstärkungen thermisch stabiler ist als das des Muffenrohres und bei dem ein Längsrand einen die Teilungslinie überdeckenden Fortsatz aufweist. Ein derartiger Muffenrohr ist aus der US-A-3 542 077 bekannt.

Gemäß der DE-B-1 525 815 ist ein Muffenrohr als länglicher, gegebenenfalls verzweigter rohr- oder schlauchförmiger Hüllenmantel aus thermoplastischem Kunststoff oder dergleichen ausgebildet, wobei die längs an der Schnittstelle verlaufenden Halteelemente durch einen längsverlaufenden, radial vorstehenden, teilbaren Wulst von T-förmigen Querschnitt gebildet werden. Über die Halbwülste wird als Verschlußelement eine C-förmige Klammer gepreßt, so daß diese zusammengeklemmt werden. Während des Schrumpfvorganges ist nun darauf zu achten, daß dieser Verschlußbereich möglichst nicht verformt wird, da sonst entlang des Schnittes ein Spalt entsteht, der zu Undichtigkeiten führt. Hierin liegt wohl auch die größte Gefahr, daß die Schrumpfkräfte während des Aufschrumpfens so groß werden, daß der Spalt, besonders im Berührungsbereich mit dem Kabel auseinandergezogen wird. Ferner ist die Gefahr gegeben, daß während des Schrumpfvorganges durch unbeabsichtige Wärmezufuhr auf das Schrumpfkräfte einer Verformung unterliegen, die schließlich zu Undichtigkeiten führt.

Die Gefahr der Verformung im Dichtungsbereich während des Schrumpfvorganges ist auch bei der in der US-Patentschrift 3.379.218 beschriebenen längsgeteilten Kabelmuffe gegeben. Als Verschlußelemente sind entlang des einen Längsrandes Löcher und entlang des zweiten Längsrandes dazugehörige hinterschnittene Knöpfe angeordnet, die ineinander eingehängt werden. Da die Längsränder und die Verschlußelemente aus dem gleichen Material wie das übrige Muffenrohr bestehen, ist auch hier im erweichten Zustand während des Schrumpfvorganges mit störenden Verformungen zu rechnen.

Der Juhatt der EP-A-23 418 gitt gemäß Art. 54 (3) zum Stand der Technik. Derin ist ein Muffenrohr, beschrieben bei dem etwa gleich ausgebildete Verschlußelemente entlang beider Längsränder angeordnet sind, die sie umfassen und gesondert aufgebracht werden. Durch diese Profilierung wird jedoch die Flexibilität des Verschlußbereiches beeinträchtigt, wobei auch hier außerdem die Wärmeempfindlichkeit der von den Verschlußprofilen umfaßten Randbereiche gegeben ist.

Die Kabelmuffe und der US-Patentschrift 3.542.077 besteht aus schrumpfbarem Material und socist entlang der beiden Längsränder aus dem gleichen Material angeformte Hakenelemente als Verschlußeinheit auf. In diese angeformten Hakenelementen sind bandförmige Einlagen enthalten, die jeweils der komplizierten Form der Haken angepaßt sind.

In der französischen Patenschrift 2 332 599 wird ebenfalls eine Umhüllung aus schrumpfbarem Material beschrieben, welche beschichtete, nicht rastende Verschlußelemente aufweist. Hier sind beim Verschließen zusätzliche Maßnahmen, wie Abbiegen oder Falzen, nötig, um sicheren Verschluß zu gewährleisten.

Schließlich wird in der britischen Patentschrift 2 043 729 eine Umhüllung beschrieben, die als Verschluß Bänder entlang beider Längsränder aufgesetzt hat, welche sowohl Dichtungs- wie auch Verschlußfunktionen dienen. Diese Bänder bestehen aus dichtendem bzw. klebendem Material.

Unserer Erfindung liegt nun die Aufgabe zugrunde, für ein Muffenrohr der eingangs geschilderten Art ein Verschlußsystem mit Rasteigenschaften entlang der Trennungslinie zu finden, das bei Zuführung von Wärme während des Schrumpfvorganges stabil bleibt und im Verschlußbereich möglichst keinen Verformungen durch Schrumpfkräfte unterliegt.

Die gestellte Aufgabe wird gemäß der Erfindung dadurch gelöst, daß die Hakenelemente stiftförmig ausgebildet sind, Verdickungen an den abstehenden Enden aufweisen und in der eingelagerten Verstärkung des einen Längsrandes eingesetzt sind, und daß die Rastelemente als im Bereich der dorteingelagerten Verstärkung im zweiten Längsrand des Muffenrohres eingebrachte Bohrungen ausgebildet sind.

Entlang der Trennungslinie des Muffenrohres sind in an sich bekannter Weise Verstärkungen angeordnet, die thermisch stabiler sind als das Material des Muffenrohres. Das bedeutet, daß das Muffenrohr im Rand- und im Verschlußbereich trotz Erweichung infolge von Wärmezufuhr während des Schrumpfvorganges nicht verformt wird. Die Verstärkungen, die entlang der Ränder eingelagert sind, stützen das Material des Muffenrohres und erlauben außerdem, daß das Dichtungsmittel, wie zum Beispiel Schmelzkleber, bei der entsprechenden Temperatur schmelzen kann und im Zusammenhang mit den sich überlappenden Dichtungsbereichen die erforderliche Dichtigkeit ergibt. Die Längsränder des Muffenrohres werden überlappend angeordnet, so daß ein Aufziehen unter Bildung eines Spaltes zwischen Kabel und Verschlußelementen nicht mehr möglich ist. Gemäß der Erfindung sind nun Haken- und Rastelemente in den Verstärkungen angebracht, die die in Umfangrichtung wirkenden Schrumpfkräfte aufnehmen. Da diese Verstärkungen flächenhaft entlang der ganzen Randbereiche angeordnet sind, wird eine gleichmäßige Kräfteverteilung staffinden, die im Dichtungsbereich nicht zu Unregelmäßigkeiten führen wird. Das Zusammenhalten der überlappenden Verschlußbereiche erfolgt durch entsprechende Verknüpfung oder Verhakung der gegenseitig ineinander greifenden Haken- und Rastelemente. Die Kraftübertragung erfolgt dabei jeweils auf die Verstärkungen und nicht direkt auf das Schrumpfmaterial des Muffenrohres.

Die Erfindung wird nun anhand von 2 Figuren näher erläutert.

Figur 1 zeigt dabei den prinzipiellen Aufbau eines Muffenrohres mit Haken- und Rastelementen im Verschlußbereich.

Figur 2 erläutert die im Material des Muffenrohres eingelagerten Verstärkungen, in denen gemäß der Erfindung die in Figur 1 angedeuteten stiftförmigen Hakenelemente und die dazu entsprechenden Bohrungen eingebracht werden.

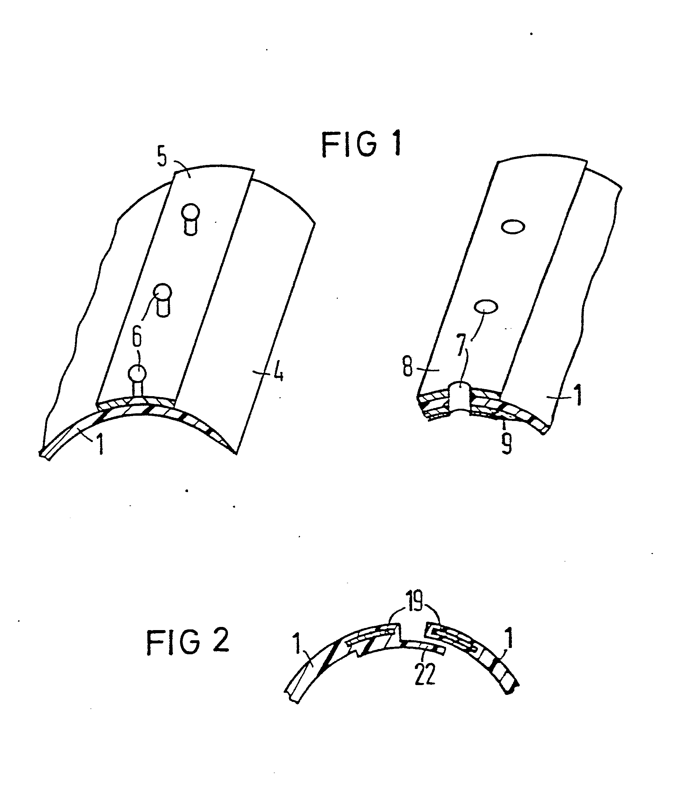

Die Figur 1 zeigt nun in prinzipieller Weise die Verschlußelemente entlang der Längsränder eines Muffenrohres 1, das sich gegenüberliegende Haken- und Rastelemente aufweist, die in Form von an den Enden verstärkten Stiften 6 auf dem innen liegenden Muffenrohrlängsrand 5 und in Form von dazu passenden Bohrungen 7 oder auch Langschlitzen in dem außen liegenden Muffenrohrlängsrand 8 angeordnet sind. Die Bohrungen 7 und die an den Enden verstärkten Stifte 6 sind dabei so aufeinander abgestimmt, daß sie ineinander rasten und sich somit in einfacher Weise nicht mehr voneinander lösen können. Es wird auch ersichtlich, daß die beiden Längsränder überlappend angeordnet und in dieser Lage miteinander verhakt werden. Der innen liegende Längsrand ist als Fortsatz 4 verlängert, durch den der Längsschlitz überdeckt wird. Der äußere Längsrand ist auf der nach innen weisenden Seite mit einem Schmelzkleber 9 versehen, der nach dem Schrumpfvorgang durch das Verschmelzen die erforderliche Abdichtung sicherstellt.

Die Verstärkungen 19 sind Material des Muffenrohres 1 entlang der Längsränder eingelagert, wie es in Figur 2 dargestellt ist. Bei dieser Anordnung wird gewährleistet, daß bei Erweichung des Materials während des Schrumpfvorganges die Längsränder entlang der Teilungslinie gefestigt bleiben. Die Verstärkungen 19 können aus einem Gittergeflecht oder auch aus einem reißfesten Folienband bestehen, in das Verschlußelemente nach der bereits beschriebenen Art engesetzt sind. An einem Längsrand ist dabei in vorteilhafter Weise ein Fortsatz 22 angeformt, der den Längsschlitz überdeckt, wobei die Abdichtung durch eine Schmelzkleberbeschichtung des Fortsatzes 22 erreicht wird.

## Patentanspruch

Längsgeteiltes Muffenrohr aus thermoplastischen Kunststoff, dem ein Formgedächtnis verleihbar und das durch Wärmezufuhr, auf den zu umhüllenden Gegenstand aufschrumpfbar ist, das an den mit völlig im Material des Muffenrohres eingelagerten bandförmigen Verstärkungen (19) versehenen Längsrändern entlang der Teilungslinie Verschlußelemente in Form von Haken- und Rastelementen (6, 7) aufweist, wobei das Material der Verstärkungen thermisch stabiler ist als das des Muffenrohres und bei dem ein Längsrand einen die Teilungslinie überdeckenden Fortsatz aufweist, dadurch gekennzeichnet, daß die Hakenelemente (6) stiftförmig ausgebildet sind, Verdickungen an den abstehenden Enden aufweisen und in der eingelagerten Verstärkung (19) des einen Längsrandes eingesetzt sind, und daß die Rastelemente als im Bereich der dort eingelagerten Verstärkung (19) im zweiten Längsrand des Muffenrohres (1) eingebrachte Bohrungen (7) ausgebildet sind.

## Claim

A longitudinally split sleeve of thermoplastic synthetic resin material, to which a shape memory can be imparted, which can be shrink-fitted onto the article which is to be enveloped by the supply of heat and which at its longitudinal edges provided with strip-shaped reinforcements (19) which are completely embedded in the material of the sleeve, along the separating line has sealing elements in the form of hook and catch elements (6, 7), wherein the material of the reinforcements is thermally more stable than that of the sleeve and wherein one longitudinal edge has an extension which covers the separating line, characterised in that the hook elements (6) are pinshaped, have thickened portions at the projecting ends and are inserted into the embedded reinforcement (19) of the one longitudinal edge, and that the catch elements are in the form of bores (7) which are inserted in the second longitudinal edge of the sleeve (1) in the region of the reinforcement (19) which is embedded therein.

## Revendication

Manchon fendu longitudinalement en matière synthétique thermoplastique, à laquelle on peut conférer une mémoire de forme, et qui peut se rétracter par apport de chaleur sur l'objet à envelopper, qui présente, sur les bords longitudinaux munis de renforcements (19) en forme de bande insérés entièrement dans le matériau du manchon et le long de la ligne de séparation, des éléments de fermeture sous forme d'éléments d'accrochage (6) et d'éléments d'encliquetage (7), le matériau des renforcements étant thermiquement plus stable que celui du manchon, et dans lequel un bord longitudinal présente un prolongement recouvrant la ligne de séparation, caractérisé en ce que les éléments d'accrochage affectent la forme de chevilles, présentent des parties épaissies aux extrémités libres et sont introduits dans le renforcement (19) inséré de l'un des bords longitudinal, et en ce que les éléments d'encliquetage sont agencés en perçages (7) ménagés dans le second bord longitudinal du manchon dans la région du renforcement (19) qui y est inséré.

FIG 1

FIG 2